# EUROPEAN PATENT APPLICATION

(11) **EP 2 466 298 A1**
(43) Date of publication of application: **20.06.2012**
(21) Application number: 11193729.8
(22) Date of filing: 15.12.2011
(51) Int. Cl.: G01N 27/414, H01B 5/14

(54) **Method of making an electrically conductive structure, method of making a gas sensor, gas sensor obtained with the method and use of the gas sensor for sensing a gas**

(30) Priority: 17.12.2010 US 201061424583 P
(71) Applicant: Stichting IMEC Nederland, 5656 AE Eindhoven (NL)
(72) Inventor: Kochupurackal, Jinesh, 641664 Singapore (SG); Crego Calama, Mercedes, 5663 PK Geldrop-Mierlo (NL); Brongersma, Sywert, 5644 GK Eindhoven (NL)
(74) Representative: Duyver, Jurgen Martha Herman

(57) **Abstract**

A method of making an electrically conductive structure in a surface portion of a dielectric material (202), characterized in that the method comprises creating vacancies at at least part of an exposed surface (204) of the dielectric material (202) by means of removing atoms from a plurality of molecules of the dielectric material (202).

## Description

The current invention relates to a method of making an electrically conductive structure in a surface portion of a dielectric material, according to the preamble of the current invention.

The current invention also relates to a method of making a gas sensor, a gas sensor obtained with such a method and use of the gas sensor for sensing a gas.

A gas sensor is a sensor device that is operative to recognize the presence of a specific gas species in the sensor's liquid or gaseous environment and to generate a sensor signal in dependence on this recognition. Typically, the gas recognition relies on adsorption, chemical reactions or electrochemical reactions between the specific gas and a solid included in the gas sensor.

A known example of a gas sensor is a solid-state gas sensor device, that uses a layer of a conducting or semiconducting metal-oxide, e.g., SnO₂, WO₃, ZnO₂, etc., exposed to the environment. Resistive techniques are used to detect the gases in the environment on the basis of a change in electrical conductance of the metal-oxide layer in the presence of a specific gas.

In another known embodiment of a solid-state gas sensor, the metal-oxide layer forms a functional part of a field-effect transistor, referred to as a metal-oxide field-effect transistor (MOxFET), implemented in e.g., silicon using a photolithographic technology.

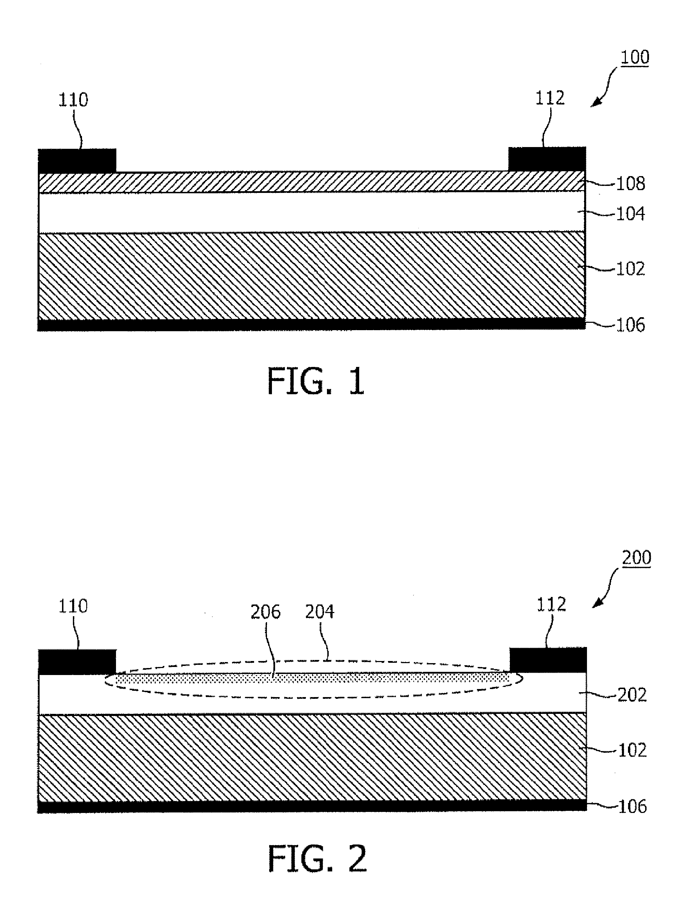

Fig.1 is a diagram of a device 100 for use in a known gas sensor and based on a MOxFET-configuration. The known device 100 comprises a silicon substrate 102, a dielectric layer 104, a back-gate contact/electrode 106, a semiconducting or conducting sensing layer 108, a first metal contact/electrode 110 and a second metal contact/electrode 112. The silicon substrate 102 is sandwiched between the dielectric layer 104 and the back-gate contact 106. The sensing layer 108 is positioned on the dielectric layer 104. The first metal contact 110 and the second metal contact 112 are positioned on top of the sensing layer 108. When gas interacts with the exposed upper surface of the sensing layer 108, the interaction changes the electrical conductivity of the sensing layer 108. The change in the electrical conductivity of the sensing layer 108 can be measured by determining the change in a current between the first metal contact 110 and the second metal contact 112 that are connected to a voltage source providing a constant voltage. Alternatively, the change in electrical conductance of the semiconducting sensing film 108 can be determined by measuring a change in a voltage between the first metal contact 110 and the second metal contact 112 connected to a current source supplying a constant current. Alternative technologies, e.g., resistance measuring technologies, can be used to determine the change in the electrical conductance of the semiconducting sensing film 108. The back-gate contact 106 can be used to tune the adsorption or desorption of the semiconducting sensing film 108 and thus to tune the sensitivity and the selectivity of the sensor with regard to a specific gas. A typical thickness of the semiconducting sensing film 108 lies in the range between10 nm and 50 nm.

A drawback of the known MOxFET-based gas sensors is that they operate at elevated temperatures, that is, well above 200° C. In order to maintain a MOxFET-based gas sensor at such an elevated temperature, a heater is used with the gas sensor, e.g., physically integrated with the gas sensor. The heater contributes significantly to the total power consumption of the gas sensor in operational use. The relatively high power consumption is especially a disadvantage in autonomous applications of the gas sensor, that is, in applications wherein the gas sensor is equipped with its own power supply and e.g. with a radio-frequency transmitter for wireless communication with a remote receiver.

It is an object of the present invention to provide a method of fabricating an electrically conductive or semiconductive structure in a surface portion of a dielectric layer not presenting the drawbacks discussed above.

It is a further objective to provide a gas sensor sensing device wherein such ultra-thin conductive or semiconductive structure can be used or is used as a sensing layer, for example as a channel in a MOxFET configuration. As a result of the ultra-thin channel, gas sensing can be carried out in practice at ambient temperature, e.g. room temperature, such that the need for heating the gas sensing device can be avoided.

The above objective is accomplished by a method, use and device according to the present invention.

Particular and preferred aspects of the invention are set out in the accompanying independent and dependent claims. Features from the dependent claims may be combined with features of the independent claims as appropriate and not merely as explicitly set out in the claims.

The present invention provides a method for making an electrically conductive structure in surface portion of a dielectric material. The method comprises creating vacancies (i.e., defects) at at least part of an exposed surface of the dielectric material by means of removing atoms from a plurality of molecules of the dielectric material.

According to preferred embodiments of the method according to the current invention, the electrically conductive structure is a very thin electrically conductive or semi-conductive layer, having a thickness of less than about 10nm, for example about 3nm - 5nm.

The method according to the present invention comprises subjecting a dielectric material to a surface treatment in order to create defects at the surface (in a surface portion) of the dielectric material. As a result of the surface treatment, a very thin (e.g. a few nm thin) electrically conductive or semi-conductive layer is created. This thin electrically conductive or semi-conductive layer can be used as a gas sensitive layer in a gas sensor. For example, the thin electrically conductive or semi-conductive layer can be used as a channel of a MoxFET transistor, wherein the resistivity of the channel is influenced by an interaction with gas molecules. The expression "electrically conductive structure" as used herein is meant to also cover an electrically semiconductive structure. That is, in a method of the invention, a dielectric material is subjected to a surface treatment that leaves a thin layer at the surface that behaves as a conductor or as a semiconductor, as opposed to an insulator. Examples of dielectric materials, which are electrical insulators at room temperature and which are suitable for the purpose of the present invention, include: oxides of rare-earth metals, such as lanthanum-oxide and erbium oxide, other high-k materials such as zirconium-dioxide, hafnium-dioxide, silicates such as zirconium-silicate, hafnium-silicate, and lanthanum-silicate, alloys of an oxide of a rare-earth metal and silicon-dioxide, organic compounds such as some solid hydrocarbons, etc.

According to preferred embodiments of the method of the present invention, removing atoms from a plurality of molecules of the dielectric material comprises bombarding the exposed surface with ions. For example, the dielectric material can be exposed to a plasma, i.e., to an ionized gas, comprising e.g., argon (Ar⁺) or oxygen (O⁻). The constituents of the plasma are preferably chosen such that the plasma selectively removes atoms from the exposed surface without chemically reacting with the exposed surface (i.e., the plasma is not a reactive plasma). The plasma is selective in removing atoms from the exposed surface in that the plasma removes that type of atoms, which leave behind the desired defects. For example, if the dielectric material comprises lanthanum-oxide, the plasma is operative to remove oxygen atoms. As another example, the dielectric material can be exposed to a collimated or focused ion beam, e.g., in an ion milling process. The constituents of the focused ion beam are chosen such that the ion beam selectively removes atoms from the exposed surface without chemically reacting with the exposed surface.

According to preferred embodiments of the current invention, the atoms are selectively removed from the plurality of molecules of the dielectric material and leave behind the electrically conductive structure in a surface portion of a dielectric material.

According to further embodiments of the method of the invention, one or more metals from the platinum group are present in a vicinity of the dielectric material during the bombarding, and the one or more metals are exposed to the bombarding.

The platinum group comprises: platinum (Pt), palladium (Pd), ruthenium (Ru), rhodium (Rh), osmium (Os) and iridium (Ir). The bombarding of the dielectric material in the presence of one or more metals from the platinum group causes atoms of the one or more metals to be deposited on the exposed surface. This results in the formation of an electrically conductive structure in a surface portion of the dielectric material, with atoms of one or more metals of the platinum group being deposited on the electrically conductive structure. As known, metals from the platinum group (conventionally referred to as "platinum group metals", abbreviated as "PGMs") such as platinum (Pt) and palladium (Pd), have excellent catalytic properties and are used to increase the rate of many types of chemical reactions. Platinum is a known catalyst for use in redox reactions, whereas palladium is a known catalyst to speed up hydrogenation and dehydrogenation reactions. In a gas sensing device wherein the thin electrically conductive layer is used as a gas sensing layer, the presence of the atoms of the one or more metals from the platinum group at the exposed surface increases the rate of the chemical reactions involved and, therefore, increases the sensitivity of the gas sensor. The one or more metals can be provided as one or more structures on a part of the dielectric material and prepared in advance, or can be located somewhere else in the plasma chamber. Different ones of the metals can be used to speed up different types of chemical reactions.

According to preferred embodiments of the method according to the invention, the dielectric material is partly covered with the one or more metals of the platinum group on a side that comprises the exposed surface before the bombarding, in an area outside the part where an electrically conductive structure is to be formed.

The inventors have found that the amount of catalyst, i.e., the surface density of the one or more metals of the platinum group after the bombardment, is preferably very low in order to prevent the unintentional formation of a major conduction path, made of these metals, on the exposed surface. The catalyst is preferably provided as a structure formed in advance on the side of the dielectric material that comprises the exposed surface. Furthermore, the one or more metals, which are provided before the bombardment on the side that comprises the exposed surface, may have been provided in advance as part of a functional structure to be exploited later on in operational use of the surface-treated dielectric material. For example, when using the surface-treated dielectric material (thin electrically conductive layer with catalyst atoms) in a gas sensor, the functional structure comprising the one or more metals can remain after the ion bombardment, and can be used as, e.g., one or more electrodes.

According to preferred embodiments of the method according to the invention, wherein the functional structure comprising the catalyst is formed on the dielectric material before the bombarding and wherein the functional structure is intended for use later on as one or more electrodes for establishing an electrical contact with the electrically conductive structure formed in a surface portion of the dielectric material through the bombarding, the electrically conductive structure is adjacent to, or next to, the functional structure comprising the catalyst. This spatial configuration may give rise to problems in the electrical contact between the structure of the catalyst and the electrically conductive structure formed by the bombarding. It may therefore be advisable to form the one or more electrodes for providing an electrical contact to the electrically conductive structure after the bombarding. However, the structure of the catalyst may be used as one or more electrodes for establishing electrical contact with a feature other than the electrically conductive structure formed by the bombarding.

The invention also relates to a method of making a gas sensor for detecting the presence of a specific gas species in the sensor's liquid or gaseous environment and to generate a sensor signal in dependence on this recognition. The gas sensor has a sensing layer susceptible to a presence of a specific gas. The sensing layer comprises an electrically conductive structure formed in, preferably a surface portion of, a dielectric material. The method comprises making the electrically conductive structure. The making of the electrically conductive structure comprises creating vacancies at at least part of an exposed surface of the dielectric material by means of removing atoms from a plurality of molecules of the dielectric material. The removing comprises, e.g., bombarding the exposed surface with ions.

According to preferred embodiments of the method according to the invention, the electrically conductive structure is formed with atoms being a catalyst, for example metals from the platinum group, involved in chemical reactions with the specific species.

As specified above, the expression "electrically conductive structure" as used herein is meant to also cover an electrically semiconductive structure.

As an option, one or more metals of the platinum group are present in a vicinity of the dielectric material during the bombarding; and the one or more metals are exposed to the bombarding.

As an option, the dielectric material is, before the bombarding, partly covered with the one or more metals of the platinum group on a side that comprises the exposed surface.

The invention also relates to a gas sensor made according to the method according to the invention, for detecting the presence of a specific gas species in the sensor's liquid or gaseous environment and to generate a sensor signal in dependence on this recognition.

The invention further relates to a device with such a gas sensor. The gas sensor comprises a sensing layer susceptible to a presence of a specific gas. The sensing layer comprises an electrically conductive structure formed in a surface portion of a dielectric material. The sensing layer is formed by creating vacancies at at least part of the surface of the dielectric layer by means of removing atoms from a plurality of molecules of the dielectric material. In an embodiment of a device according to the invention, the gas sensor has a MOxFET configuration. For example, the electrically conductive structure can form a channel of the MoxFET. Optionally, the gas sensor comprises a back-gate electrode for control of a sensing capability of the sensing layer through control of a voltage at the back-gate electrode. In a further embodiment, further atoms of a metal from the platinum group are present at a surface of the sensing layer. In a further embodiment, the sensing layer, preferably the electrically conductive structure, is electrically connected between a first electrode and a second electrode, and, more preferably, at least one of the first electrode and the second electrode substantially comprises a metal from the platinum group.

According to preferred embodiments of the current invention, the thickness of the sensing layer is smaller than or equals the Debye length of the sensing layer.

According to preferred embodiments of the device according to the current invention comprises at least a second gas sensor, such as for example, 2, 3, 4, 5, 6, 7, 8, 9, etc. gas sensors. The second gas sensor comprises a second sensing layer susceptible to a presence of a specific gas, e.g. another specific gas. The second sensing layer comprises a second electrically conductive structure formed in a surface portion of a second dielectric material. The second sensing layer is formed by creating second vacancies at at least part of the second surface by means of removing second atoms from a plurality of second molecules of the second dielectric material.

Accordingly, an array of two or more gas sensors can be accommodated in a single device. Different ones of the gas sensors can be made sensitive to different gases and/or different ones of the gas sensors can be made sensitive to a same gas with different sensitivities in a variety of manners.

According to preferred embodiments of the device of the current invention, a first manner for e.g. making different gas sensors sensitive to different gases is to use chemically different dielectric materials in a surface portion of which a sensing layer is created. That is, the second dielectric material of the second gas sensor is chemically different from the dielectric material of the first gas sensor. For example, the dielectric material can comprise silicon nitride (Si₃N₄) for rendering the first gas sensor sensitive to nitrogen-based gaseous compounds such as nitrogen-oxide and nitrogen-dioxide; and the second dielectric material can comprise zinc-oxide (ZnO₂) for rendering the second gas sensor sensitive to e.g. carbon-monoxide.

According to preferred embodiments of the device of the current invention, a second manner is to use different back-gate voltages. More specifically, the first gas sensor can have a first MOxFET configuration and the second gas sensor can have a second MOxFET configuration. The first MOxFET configuration of the first gas sensor has a first back-gate electrode for receipt of a first back-gate voltage in operational use of the first gas sensor. The second MOxFET configuration of the second gas sensor has a second back-gate electrode for receipt of a second back-gate voltage in operational use of the second gas sensor. The first back-gate voltage and the second back-gate voltage have substantially different magnitude in operational use of the device.

According to preferred embodiments of the device of the current invention, a third manner is to selectively increase the sensitivity of specific ones of the gas sensors by means of using a catalyst at the sensing layer of one of the gas sensors only, or to use different catalysts at the different sensing layers of the different gas sensors. More specifically, the sensing layer has a first surface exposed to an environment of the device in operational use of the gas sensor; and the second sensing layer has a second surface exposed to the environment in operational use of the second gas sensor. At least a specific one of the first surface of the sensing layer and the second surface of the second sensing layer comprises further atoms of a specific metal from the palladium group. For example, the first surface of the sensing layer comprises the further atoms of the specific metal of the palladium group, whereas the second surface of the second sensing layer comprises other atoms of another metal of the palladium group. For example, platinum is a metal of the palladium group that can serve as a catalyst to increase the sensitivity to carbon-dioxide, whereas palladium is another metal of the palladium group that that can serve as a catalyst to increase the sensitivity to hydrogen.

According to preferred embodiments of the device of the current invention, a fourth manner is to use a combination of the features of two or three of the first manner, the second manner and the third manner.

A gas sensor according to the invention has an ultra-thin sensing layer, as a result of which the gas sensor is operational at much lower temperatures than the known solid-state gas sensors, such that the need for heating the gas sensor during operation can be avoided.

The invention also relates to the use of the gas sensor according to the invention and/or the device according to the invention for detecting the presence the specific gas.

The concept "gas sensor" as introduced within the context of the invention is meant to be exposed to a gaseous or liquid environment, into which molecules of a specific chemical compound are dispersed to which the gas sensor is sensitive.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example. those skilled in the art will recognize that the invention may be embodied or carried out in a manner that achieves or optimizes one advantage or group of advantages as taught herein without necessarily achieving other objects or advantages as may be taught or suggested herein. Further, it is understood that this summary is merely an example and is not intended to limit the scope of the invention as claimed. The invention, both as to organization and method of operation, together with features and advantages thereof, may best be understood by reference to the following detailed description when read in conjunction with the accompanying drawings.
Fig.1 is a diagram of a device for use in a known gas sensor;
Fig.2 is a diagram of a device according to the present invention for use in a gas sensor;
Figs. 3-6 are diagrams of a first example of a method according to the invention for creating an atomically thin sensing layer;
Figs. 7-10 are diagrams illustrating a second example of a method according to the invention for creating an atomically thin sensing layer;
Fig.11 is a diagram showing, for different magnitudes of gate bias, the measured current-voltage behavior of a sensing layer created according to a method of the invention; and
Fig.12 is a diagram showing the measured electrical behavior of a sensing layer according to the invention in operational use as a gas sensor.

Any reference signs in the claims shall not be construed as limiting the scope of the present invention.

In the different drawings, the same reference signs refer to the same or analogous elements.

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present invention. While the present invention will be described with respect to particular embodiments and with reference to certain drawings, the invention is not limited hereto. The drawings included and described herein are schematic and are not limiting the scope of the invention. It is also noted that in the drawings, the size of some elements may be exaggerated and, therefore, not drawn to scale for illustrative purposes.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

The present invention provides a method for fabricating an ultra-thin electrically conductive or semiconductive structure in a surface portion of a dielectric layer. The present invention further provides a gas sensing device wherein such ultra-thin conductive or semiconductive structure is used as a sensing layer, for example as a channel in a MOxFET configuration. As a result of the ultra-thin channel, gas sensing can be carried out in practice at ambient temperature, e.g. room temperature, such that the need for heating the gas sensing device can be avoided.

A drawback of the known MOxFET-based gas sensors is that they operate at elevated temperatures, that is, well above 200° C. In order to maintain a MOxFET-based gas sensor at such an elevated temperature, a heater is used. The heater contributes significantly to the total power consumption of the gas sensor in operational use. It would be advantageous, therefore, to have a solid-state gas sensor that operates at a much lower temperature, e.g., at room temperature, such that the need for heating can be avoided.

The adsorption of a gas by a metal-oxide layer (e.g. used as a sensing layer in a solid-state gas sensor) and the desorption of a gas from a metal-oxide layer can be influenced by applying an electric field to the metal-oxide layer, e.g., using back-gating in a MOxFET-based configuration. In order to be able to do so, the thickness of the metal-oxide layer should be in the order of (or smaller than) the Debye length of the metal-oxide layer. As known, the Debye length is the characteristic distance, over which charge carriers screen out electric fields in a conductor and over which significant charge separation can occur. The Debye length λ_{D} of a material with relative permittivity εᵣ, a density N of the electrical-charge carriers that each carry an electrical charge q, and kept at a temperature T, is given by the mathematical expression λ_{D} = √ [(ε₀ · εᵣ · k_{B} · T)/ (2 · q² · N)], wherein k_{B} is Boltzmann's constant and ε₀ is the electric constant (or: vacuum permittivity). For example, for doped silicon, the dielectric permittivity εᵣ is about 11.75, and the density of the mobile charge carriers with an elementary charge (electron, or a hole) is in the order of 10¹⁸. At room temperature, the Debye length λ_{D} is then about 3nm. Also for metal oxide materials such as for example ZnO₂ the Debye length at room temperature is in the order of a few nm. Accordingly, in order to be able to influence through the back-gate of the MOxFET, the adsorption and the desorption at the metal-oxide layer overlying the silicon material, the thickness of the metal-oxide sensing layer should be very thin (less than 10 nm, e.g. 3 nm to 5 nm) with an accuracy in thickness at the atomic-level. Depositing an ultra-thin layer with a thickness in the order of 3 nm generally necessitates expensive deposition techniques, such as atomic layer deposition (ALD) or chemical vapor deposition (CVD).

The present invention provides a method for creating ultra-thin (e.g. a few nm thin) electrically conductive or semi-conductive structures in a surface portion of a dielectric layer, such as a metal-oxide layer. The present invention further provides gas sensors comprising such ultra-thin electrically conductive or semi-conductive structures as a gas sensing layer and a method for fabricating such gas sensors. It is an advantage of gas sensors according to the present invention that they are operational at much lower temperatures, e.g., at ambient temperature, such that the need for heating can be avoided. Gas sensors of the present invention are easily fabricated and easily handled, which is advantageous for mass-production, they consume much less power than the known gas sensors, and they can be easily integrated with semiconductor technology.

Fig. 2 is a diagram of device 200 according to the invention. The device 200 according to the invention has a MOxFET-configuration and is designed for use in a gas sensor according to the invention. The device 200 according to the invention differs structurally from the known device 100 (shown in Fig. 1) in that, among other things, the portion between, on the one hand, the silicon substrate 102 and, on the other hand, the first metal contact/electrode 110 and the second metal contact/electrode 112, is configured in a different manner. As a result of the structural difference, the device 200 according to the invention differs functionally from the known device 100 in that a gas sensor, based on the configuration of the device 200 according to the invention, is fully operational at ambient temperature, e.g., at room temperature, as opposed to the elevated temperatures of, e.g., 200 °C required by the known device 100. As a result, no provisions are required for heating the device 200 according to the invention in order to render it operational under practical circumstances.

The device 200 according to the invention comprises a dielectric layer 202 on top of the silicon substrate 102. The dielectric layer 202 is for example substantially comprised of a metal-oxide, e.g., lanthanum-oxide (La₂O₃). Lanthanum-oxide has been studied widely as a possible replacement of silicon dioxide in metal-oxide-semiconductor field-effect transistor (MOSFET) technology, owing to the electrical properties of lanthanum-oxide. Lanthanum-oxide has a very high relative permittivity (εᵣ = 27), and an average resistivity of 10 kΩ/cm at room temperature. A top surface 204 of the metal-oxide dielectric layer 202 has been exposed to an ion bombardment. As a result of the bombardment, oxygen atoms have been removed from the lattice of the metal-oxide in a surface portion of the dielectric layer 202 at the top surface 204, thus creating defects in the integrity of the lattice in the surface portion of the metal-oxide layer. The ion bombardment leaves oxygen vacancies and isolated metal atoms in the surface portion at the top surface 204 of the dielectric layer 202. This creates a sensing layer 206 in the surface portion with a thickness in the order of a typical dimension of a few mono-layers. As known, a monolayer is a layer or film with a thickness of a single atom or a single molecule. In the example shown, the sensing layer 206 created in the invention has a thickness in the order of a few lanthanum atoms. By means of tuning the power of the bombardment, the thickness of the layer of defects can be tuned to be in the order of a nanometer.

Accordingly, the solid-state gas sensor 200 in the invention has an electrically conductive structure 206 made in a surface portion of the dielectric material 202. The dielectric material is substantially comprised of an electrically insulating metal-oxide, the molecules of which are formed by ionic bonds between one or more atoms of a metal and one or more other atoms of oxygen. Vacancies are created at at least a part of the exposed top surface 204 of the dielectric material by means of removing a plurality of the oxygen atoms from the molecules of the metal-oxide at the exposed surface of the dielectric material. The region comprising the vacancies forms the electrically conductive structure and serves as the sensing layer of the gas sensor. In the example shown in Figure 2, the electrically conductive structure 206 is only present in between the first metal contact 110 and the second metal contact 112. However, in embodiments of the present invention the electrically conductive structure 206 can also be present underneath the first metal contact 110 and/or the second metal contact 112.

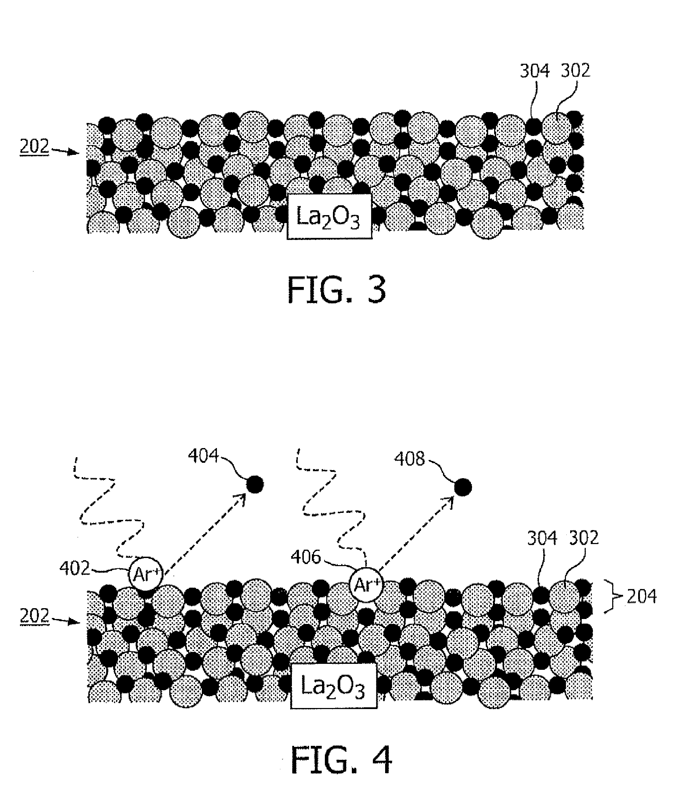

Figs. 3-6 illustrate an example of a first embodiment 300 of a method of creating the atomically thin sensing layer 206 formed in a surface portion of a dielectric layer of lanthanum-oxide.

Fig.3 is a diagram that illustrates the dielectric layer 202 formed from lanthanum-oxide deposited on the silicon substrate 102 (not shown here). Lanthanum-oxide comprises atoms of the chemical element lanthanum (a rare earth metal), e.g., La-atom 302, and atoms of oxygen, e.g., O-atom 304, that form a lattice of molecules of the chemical compound La₂O₃ through ionic bonds.

Fig.4 is a diagram illustrating the dielectric layer 202 of lanthanum-oxide being exposed to a bombardment of ions. In the example illustrated, the top surface 204 of the dielectric layer 202 of La₂O₃ is exposed to a bombardment of argon ions (Ar⁺ ions), e.g., by exposure to an Ar⁺ plasma. As a result of the exposure, oxygen atoms are removed from a surface portion at the exposed surface of the dielectric layer 202. The diagram of Fig.4 illustrates a first argon-ion 402, incident on the surface of the dielectric layer 202 and removing a first oxygen atom 404 from the dielectric layer 202, and a second argon ion 406, incident on the surface of the dielectric layer 202 and removing a second oxygen atom 408 from the dielectric layer 202. The ion bombardment causes a morphological change or a phase change of the dielectric material 202 in a surface portion at the exposed surface. The morphological change or the phase change results in the conducting or semiconducting sensing layer 206.

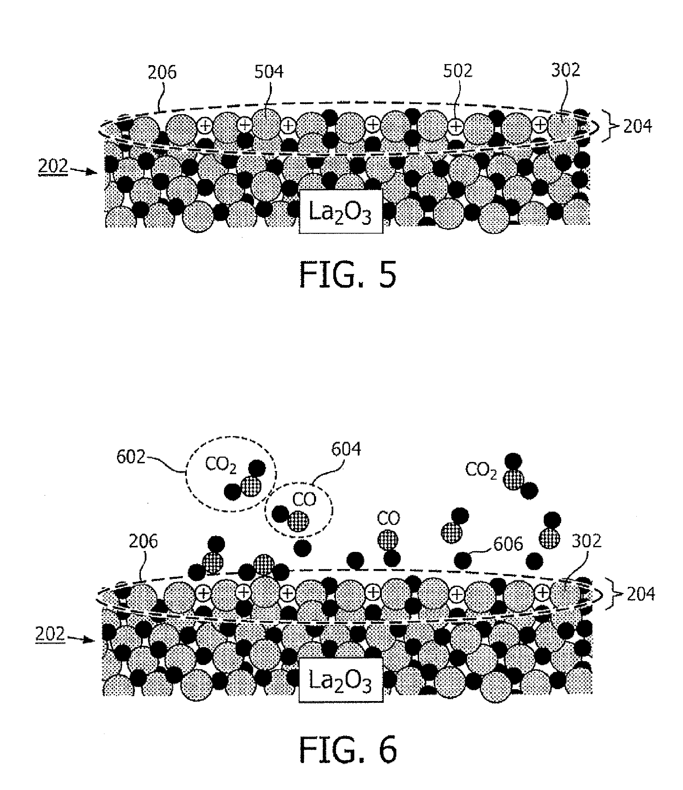

Fig.5 is a diagram illustrating the effect of the ion-bombardment. The result of the ion-bombardment is that oxygen vacancies, e.g., vacancy 502, and spatially isolated lanthanum ions, e.g., lanthanum ion 504, are left in a surface portion at the surface 204. This creates the atomically thin sensing layer 206 in a surface portion of the dielectric layer 202.

Reference is now made to the diagram of Fig.6. Lanthanum is known as a catalyst that reduces carbon-dioxide (CO₂) into carbon-monoxide (CO) and oxygen. If the sensing layer 206, formed from the ion-bombarded lanthanum-oxide layer 202, is exposed to a medium containing non-redox gases, such as carbon-dioxide, the conductivity of the sensing layer 206 changes due to the catalytic activity of the lanthanum atoms. The diagram of Fig.6 indicates a carbon-dioxide molecule with reference numeral 602. The catalytic activity reduces carbon-dioxide molecules into molecules of a redox gas carbon-monoxide and free atoms of oxygen. The diagram of Fig.6 indicates a molecule of carbon-monoxide with reference numeral 604 and a free atom of oxygen with reference numeral 606. The reaction of the carbon-dioxide with the vacancies, such as the vacancy 502, and with the spatially isolated lanthanum ions, such as the lanthanum ion 504, giving rise to a gas mixture of carbon-monoxide and oxygen, also changes the surface leakage currents. The radicals carbon-monoxide and oxygen thus formed will attach to the surface and will effectively influence the conduction of electrons via the sensing layer 206 formed by the defects caused by the ion bombardment. Since the thickness of the sensing layer 206 is smaller than the Debye length of the sensing layer 206 in this case, the leakage current through the sensing layer 206 will be very sensitive to the presence of gas molecules at the surface of the sensing layer 206.

A method of the invention is illustrated, by way of example, with a scenario wherein lanthanum-oxide is the dielectric material subjected to an ion bombardment in order to create a surface layer of defects that will serve as the sensing layer 206 of a specific gas sensor. Similar scenarios are possible with other dielectric materials, examples of which have been mentioned elsewhere. For example, hafnium-dioxide, zirconium-dioxide or erdium-oxide can be used to similar advantage.

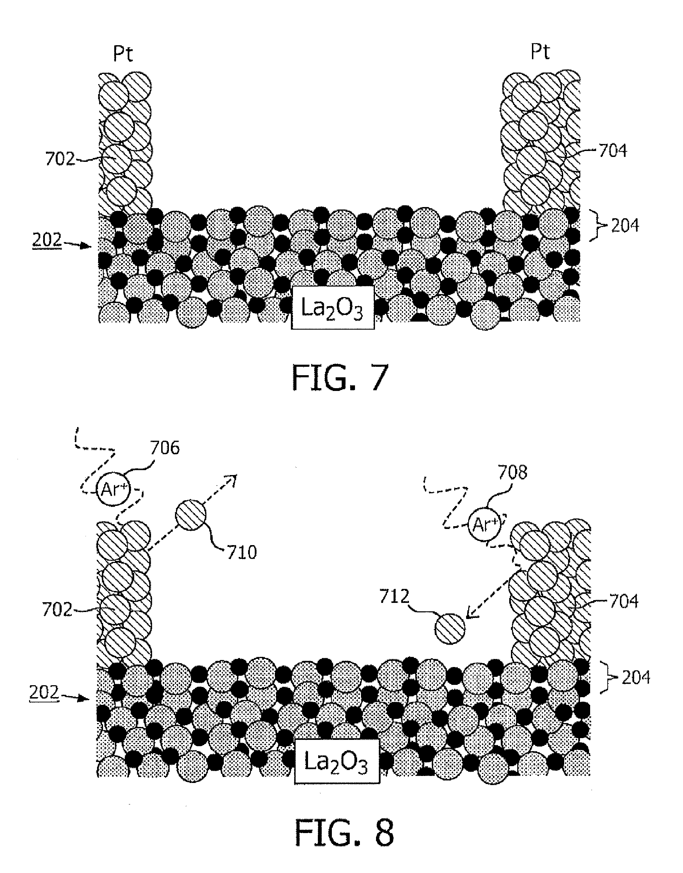

Figs. 7-10 illustrate an example of a second embodiment 300 of a method of creating the atomically thin sensing layer 206 formed in a surface portion of the dielectric layer 202 of lanthanum-oxide.

Platinum is well known as a catalyst to speed up the chemical reaction that reduces carbon-dioxide into carbon-monoxide and oxygen.

Fig.7 is a diagram illustrating the dielectric layer 202 of lanthanum-oxide that has been provided with one or more platinum structures or platinum electrodes, e.g., a first platinum structure 702 and a second platinum structure 704, at the top surface 204.

Fig.8 is a diagram that illustrates the dielectric layer 202 of lanthanum-oxide, which carries the first platinum structure 702 and the second platinum structure 704, being exposed to a bombardment of argon-ions. The argon ions are incident on the dielectric layer 202 of lanthanum-oxide, and on the first platinum structure 702 and the second platinum structure 704. In the diagram of Fig.8, reference numeral 706 indicates a first one of the argon ions that is incident on the first platinum structure 702, and reference numeral 708 indicates a second one of the argon ions that is incident on the second platinum structure 704. In order to not obscure the drawing the argon ions, which are incident on the top surface 204 of the dielectric layer 202 of lanthanum-oxide, have not been represented in the diagram of Fig.8.

The bombardment of the first platinum structure 702 and the second platinum structure 704 by the argon ions causes platinum atoms to be dislodged from the first platinum structure 702 and the second platinum structure 704, e.g., a first platinum atom 710 and a second platinum atom 712.

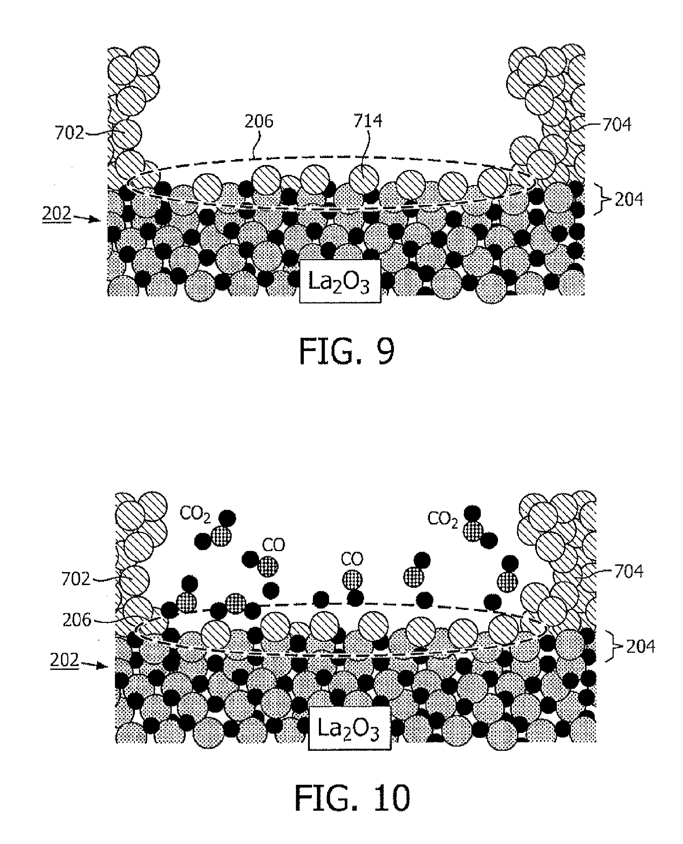

Fig.9 is a diagram illustrating that the exposure to the bombardment with argon ions eventually leads to a re-depositing of the dislodged platinum atoms on the top surface 204 of the dielectric layer 202 of lanthanum-oxide, as well as to the removal of oxygen atoms from the top surface 204 of the dielectric layer 202 of lanthanum-oxide, as discussed above with reference to Figs. 3-6. This result is the sensing layer 206 with platinum atoms on top, e.g., a third platinum atom 714. The presence of the platinum atoms on top of the sensing layer 206 can be beneficial for accelerating the reduction reaction (of, for instance, carbon-dioxide as illustrated in the diagram of Fig.10), thereby enhancing the sensing properties of the sensing layer 206.

Above embodiment illustrates a method of the invention, by way of example, that uses platinum. Other catalytic materials may be used instead, such as other metals of the platinum group, referred to earlier.

The diagrams of Figs. 7-10 show the first platinum structure 702 and the second platinum structure 704 as adjacent to the sensing layer 206. As mentioned earlier, the catalyst structure (here: the first platinum structure 702 and the second platinum structure 704) may, under circumstances, not be suitable as electrodes to establish reliable electrical contact with the electrically conductive structure (here: sensing layer 206) formed through the bombarding. A reason for this is that the dielectric material below the first platinum structure 702 and below the second platinum structure 704 is partly shielded against the bombarding. As a result, the sensing layer 206 may not extend far enough underneath the first platinum structure 702 and the second platinum structure 704 to establish reliable electrical contact. Therefore, the one or more metallic electrodes for electrical contact with the sensing layer 206 can be formed after the bombarding, i.e., after the sensing layer 206 has been created through the bombarding. If the catalyst structure is intended for being used later as electrical contact to other features (not shown) formed on or positioned on the dielectric material, e.g., after the bombarding, the catalyst structure is preferably either positioned away from the part of the surface of the dielectric material that is exposed to the bombarding.

Accordingly, the invention relates to a novel technique for fabricating electrically conducting ultra-thin films using a dielectric film exposed to an ion bombardment through, e.g., a plasma, such as an argon plasma.

In order to demonstrate the feasibility of the invention, a device was made with an atomic lanthanum-oxide layer of about 15 - 20 nm thickness, deposited on silicon and with platinum electrodes on top. The distance between the platinum electrodes was 150 µm. The device was exposed to an argon plasma for about 3 minutes. After exposure to the argon plasma, the lateral electrical conductivity of the device was measured. The resistance of the lanthanum-oxide layer between the platinum electrodes was about 1.5 MΩ before the exposure to the argon plasma. After the exposure to the argon plasma the resistance had changed to about 300 kΩ.

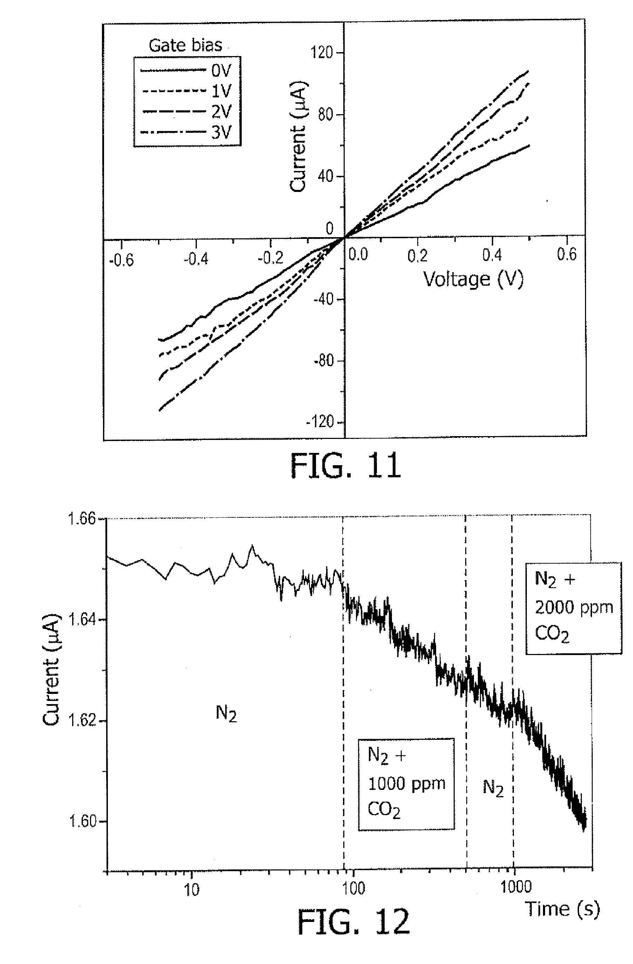

Reference is now made to the diagram of Fig.11. In order to check whether the lanthanum-oxide surface had been modified through the plasma exposure and to assure that the surface conductance was not an artifact of the platinum re-deposition from the plasma sputtering, the device was tested with a gate biasing. Please note that the conductivity of a metallic film is a result of the presence of free electrons and that the conductivity does not change with gate bias. The diagram of Fig.11 shows that the conductivity of the sensing layer 206 indeed changes with gate bias. The diagram of Fig.11 shows, for different magnitudes of gate bias, the measured current-voltage behavior of a lanthanum-oxide layer, originally 20nm thick, after exposure to the plasma of argon ions. The measurements are ample evidence to demonstrate that the surface conductivity is either due to the defects created at the top surface 204 of the dielectric layer 202, or by the structural modification of the top surface 204 of the dielectric layer 202 that was converted into a semiconducting layer as a consequence of the exposure to the plasma.

Reference is now made to Fig.12. In order to test operational use of the device as a gas sensor, the electrical current was measured through the device as a function of time, while the platinum electrodes were connected to a constant voltage source supplying a voltage of 0.5 V. The current was measured first when the device was stabilized in a nitrogen atmosphere in a gas-tight measurement chamber. Thereafter, carbon-dioxide was admitted to the measurement chamber and mixed with the nitrogen. First, measurements were carried out with a carbon-dioxide concentration of 1000 ppm in the measurement chamber, and then with a carbon-dioxide concentration of 2000 ppm in the measurement chamber. Fig.12 is a diagram that shows the reduction of the current when the device was exposed to different concentrations of carbon-dioxide. The decrease of the current when exposed to carbon-dioxide supports the conclusion that the sensing mechanism is based on the reduction of carbon-dioxide in carbon-monoxide and oxygen. The chemisorption of carbon-dioxide that is induced by the defects of the sensing layer 206 reduces the electrical conductivity of the sensing layer 206 by hindering the electric charge flow through the atomically thin sensing layer 206.

## Claims

1. A method of making an electrically conductive structure in a surface portion of a dielectric material (202), **characterized in that** the method comprises creating vacancies at at least part of an exposed surface (204) of the dielectric material (202) by means of removing atoms from a plurality of molecules of the dielectric material (202).

2. A method according to claim 1, **characterized in that** the electrically conductive structure is a very thin electrically conductive or semi-conductive layer, having a thickness of less than about 10nm, for example about 3nm - 5nm.

3. A method according to claim 1 or 2, **characterized in that** the removing comprises bombarding the exposed surface (204) with ions, for example by exposing the dielectric material exposed to a plasma.

4. A method according to any one of claims 1 - 3 **characterized in that** the atoms are selectively removed from the plurality of molecules of the dielectric material (202) and leave behind the electrically conductive structure in a surface portion (204) of a dielectric material (202).

5. A method of making a gas sensor for detecting the presence of a specific gas species in the sensor's liquid or gaseous environment and to generate a sensor signal in dependence on this recognition, the gas sensor comprising a sensing layer (206) susceptible to a presence of a specific gas, the sensing layer (206) comprising an electrically conductive structure formed in a dielectric material (202), wherein the method comprises making the electrically conductive structure by the method according to any one of claims 1 - 4 at the exposed surface (204) of the dielectric material (202).

6. A method according to claim 5, **characterized in that** the electrically conductive structure is formed with atoms being a catalyst, for example metals from the platinum group, involved in chemical reactions with the specific gas species.

7. A gas sensor made according to the method of any one of claims 5 or 6, for detecting the presence of a specific gas species in the sensor's liquid or gaseous environment and to generate a sensor signal in dependence on this recognition.

8. A device (200) with a gas sensor according to claim 7.

9. A device (200) according to claim 8, **characterized in that** the device (200) has a MOxFET configuration, and **in that** the device (200) comprises a back-gate electrode (106) for control of a sensing capability of the sensing layer (206) through control of a voltage at the back-gate electrode (106).

10. A device (200) according to claim 9, **characterized in that** the thickness of the sensing layer (206) is smaller than or equals the Debye length of the sensing layer (206).

11. A device (200) according to any one of claims 8 - 10, **characterized in that** the sensing layer (206), preferably the electrically conductive structure, is electrically connected between a first (110) and a second (112) electrode, at least one of the first and the second electrode (110, 112) substantially comprising a metal from the platinum group.

12. A device (200) according to any one of claims 8 - 11, **characterized in that** the device (200) comprises at least a second gas sensor according to claim 7, wherein the second gas sensor comprises a second layer susceptible to a presence of a specific gas, the second sensing layer comprises a second electrically conductive structure formed in a surface portion of a second dielectric material, the second sensing layer is formed by creating second vacancies at at least part of the second surface by means of removing second atoms from a plurality of second molecules of the second dielectric material.

13. A device (200) according to claim 12, **characterized in that** the second dielectric material of the second gas sensor is chemically different from the dielectric material of the first gas sensor.

14. A device (200) according to claim 12 or 13, **characterized in that** the first gas sensor has a first MOxFET configuration according to claim 9 and the second gas sensor has a second MOxFET configuration according to claim 9, the first MOxFET configuration of the gas sensor has a first back-gate electrode for receipt of a first back-gate voltage in operational use of the first gas sensor, the second MOxFET configuration of the second gas sensor has a back-gate electrode for receipt of a second back-gate voltage in operational use of the second gas sensor; and the first back-gate voltage and the second back-gate voltage have substantially different magnitude in operational use of the device.

15. Use of the gas sensor according to claim 7 and/or the device according to any one of claims 8 - 14 for detecting the presence the specific gas.
